# EUROPEAN PATENT APPLICATION

(11) **EP 4 510 604 A1**
(43) Date of publication of application: **19.02.2025**
(21) Application number: 24177793.7
(22) Date of filing: 23.05.2024
(51) Int. Cl.: H04N 23/73, H04N 23/68

(54) **MULTI-MODE CAMERA FRAME SHARING ALGORITHM FOR CV FEATURES IN XR HEADSETS**

(30) Priority: 14.08.2023 US 202318233581
(71) Applicant: Meta Platforms Technologies, LLC, Menlo Park, CA 94025 (US)
(72) Inventor: Guerrieri, Fabrizio, Menlo Park, 94025 (US); Wales Jr., Richard Edward, Menlo Park, 94025 (US); Maróy, Ákos, Menlo Park, 94025 (US); Davis, Justin Michael, Menlo Park, 94025 (US); Sun, Howard, Menlo Park, 94025 (US); Jaimez, Mariano José, Menlo Park, 94025 (US)
(74) Representative: Murgitroyd & Company

(57) **Abstract**

Disclosed herein are systems and methods related to an image capture device and one or more processors. The image capture device can capture one or more images. The one or more processors can determine that a parameter, such as gain or exposure, of the one or more images satisfies a threshold and cause the image capture device to reduce a frame rate of detecting the one or more images responsive to the parameter satisfying the threshold.

## Description

### TECHNICAL FIELD

The present disclosure is generally related to systems and methods for manipulating camera operation.

### BACKGROUND

Developments in computing devices and communication devices have prompted growth in wearable technology. Wearable devices may integrate various components in a compact form, such that the wearable devices can be portable yet perform complex processes. For example, a wearable device may be a smart watch that may access content over the network, and may control or communicate with other computing devices, etc. Wearable devices may capture images.

### SUMMARY

According to a first aspect, there is provided a method, comprising: capturing, by an image capture device, one or more images; determining, by one or more processors coupled with memory, that a parameter of the one or more images meets a threshold; and causing the image capture device to reduce a frame rate of capturing the one or more images responsive to the parameter meeting the threshold.

The parameter of the one or more images may correspond to a gain and an exposure. The method may further comprise causing, by the one or more processors, the image capture device to reduce the frame rate responsive to a function of the gain and the exposure exceeding a threshold.

The method may comprise causing, by the one or more processors, the image capture device to reduce the frame rate responsive to the parameter meeting a low light condition.

The method may comprise: reducing, by the one or more processors, the frame rate from a first frame rate to a second frame rate responsive to the parameter exceeding a first threshold; and increasing, by the one or more processors, the frame rate from the second frame rate to the first frame rate responsive to the parameter falling below a second threshold less than the first threshold.

The image capture device may be a first image capture device. The method may further comprise maintaining, by the one or more processors, alignment of images captured by the first image capture device and a second image capture device prior to and subsequent to causing the first image capture device to reduce the frame rate.

A first frame rate may be 120 Hz. A second frame rate may be 50 Hz or 60 Hz.

The image parameter may correspond one or more of a gain, an exposure, a frame brightness, a shutter speed, an aperture, a signal to noise ratio (SNR) of the image, or a sharpness of the image.

The method may further comprise performing a tracking operation using the one or more images.

According to a second aspect, there is provided a system, comprising: an image capture device; and one or more processors configured to carry out the method of the first aspect.

The image capture device may be a first image capture device. The system may comprise a second image capture device.

The system may further comprise a wearable housing coupled with the image capture device, the display device, and the one or more processors.

According to a third aspect, there is provided a computer-readable medium with instructions embodied thereon that, when executed by one or more processors, cause the one or more processors to perform the method of the first aspect. The medium may be non-transitory.

According to a fourth aspect, there is provided a computer program product comprising instructions which, when executed by a computer, cause the computer to perform the method of the first aspect.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of a wearable device, according to an example implementation of the present disclosure.
FIG. 2 is a diagram showing a perspective view of a head wearable display, according to an example implementation of the present disclosure.
FIG. 3 is a diagram of a system for manipulating camera operation based on environmental conditions, according to an example implementation of the present disclosure.
FIG.4 is a diagram of an example change of camera operation based on environmental conditions, according to an example implementation of the present disclosure.
FIG. 5 is a flowchart showing a method of manipulating camera operation based on environmental conditions.
FIG. 6 is a block diagram showing a computing environment of a wearable device, according to an example implementation of the present disclosure.
FIG. 7A is a diagram showing a perspective view of a wearable device including a computing device attached to a cradle, according to an example implementation of the present disclosure.
FIG. 7B is a diagram showing a perspective view of a wearable device including a computing device detached from a cradle, according to an example implementation of the present disclosure.
FIG. 8 is a diagram of a system environment including wearable devices, according to an example implementation of the present disclosure.
FIG. 9 is a diagram of an example wireless communication system, according to an example implementation of the present disclosure.

### DETAILED DESCRIPTION

Before turning to the figures, which illustrate certain implementations in detail, it should be understood that the present disclosure is not limited to the details or methodology set forth in the description or illustrated in the figures. It should also be understood that the terminology used herein is for the purpose of description only and should not be regarded as limiting.

Disclosed herein are implementations related to systems and methods of manipulating an operation of a camera based on environmental conditions. An image capture device, such as a camera, can be used to perform various computing operations using images captured by the image capture device. For example, the captured images can be processed to perform operations such as computer vision operations, headset tracking, hand tracking, controller tracking, object tracking, or various combinations thereof. The images can be processed for generating display data for presentation by a display device. It may be useful for various such operations, including but not limited to tracking operations, to have the images be captured at relatively high frame rates, such as 120 Hz frame rates. Often, environmental conditions can affect the capture of the images. For example, low lighting in the environment can cause deterioration in image quality, such as blurry or noisy images. Low lighting can be especially problematic when capturing images at a high frame rate, such as at 120 Hz. This can create a negative experience for a user interacting with the display device, as well as waste computational resources of the camera and display device through attempted corrections, wasted frames, etc. These issues can be exacerbated if the camera is operating at a higher frame rate.

Systems and methods in accordance with the present disclosure can control camera operations to increase performance when environmental conditions impact image quality. The disclosed systems and methods can mitigate the effects of environmental conditions of the quality of image capture while performing at a high frame rate. The system can operate an image capture device at a higher (e.g., 120 Hz) frame rate when the environmental conditions indicate that this will not impact the image quality or user experience. Likewise, the system can operate the image capture device at a lower (e.g., 50 or 60 Hz) frame rate if the environmental conditions are not suitable for the higher frame rate.

Operating at a high frame rate can be desirable for displaying high quality images, computer vision, and image tracking. Operation at a higher frame rate may be suitable, for example, to provide sufficient data for various device features or functions, such as hand tracking and/or operations that rely on hand tracking data, including during certain environmental conditions. For example, the data available to use from captured images can relate to environmental conditions such as ambient light in the environment, and can relate to how operating parameters of the camera, such as gain, exposure (e.g., an exposure time that can correspond to an amount of light received by a sensor of the camera), or aperture, among others, are implemented. For example, when the environment is sufficiently bright to meet various criteria (e.g., to ensure little to no flicker or image blur, etc.), the camera can be operated at the high frame rate. Conversely, when the light in the environment is too low to meet criteria for the captured images-even when gain and/or exposure are controlled to attempt to meet the criteria-the device can reduce the frame rate, allowing for more light to be received at the sensor (e.g., by allowing for greater exposure times to be implemented). As such, the device can control the frame rate to allow for more effective performance of operations including but not limited to computer vision capabilities. Furthermore, changing operation parameters of the image capture device can reduce power loss and wasted computational resources, as the higher frame rate will not operate when it is not practical to do so.

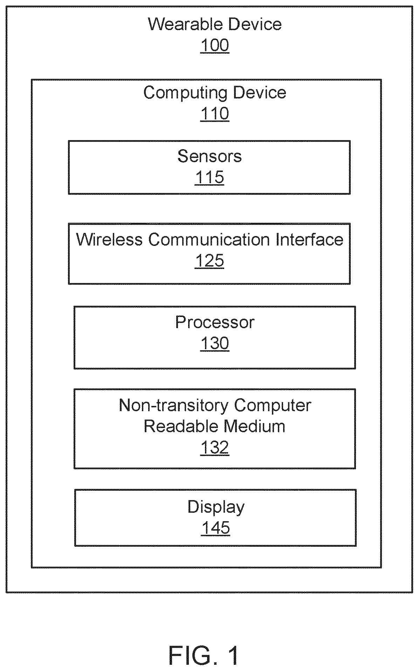

Turning now to the figures, FIG. 1 is a diagram of a wearable device 100, according to an example implementation of the present disclosure. In some implementations, the wearable device 100 may be the wearable device 810 or the wearable device 850, described herein. In some implementations, the wearable device 100 includes a computing device 110 and a cradle (not shown in FIG. 1), to which the computing device 110 can be selectively attached. In some implementations, the computing device 110 includes sensors 115, wireless communication interfaces 125 (also referred to as "wireless interfaces 125" herein), processor 130, non-transitory computer readable medium 132, and a display 145. These components may operate together to communicate with another device, and generate or render content (e.g., artificial reality content). In other implementations, the wearable device 100 includes more, fewer, or different components than shown in FIG. 1.

In some implementations, the sensors 115 include electronic components or a combination of electronic components and software components that detect a proximity of a user wearing the wearable device 100. For example, the sensors 115 can include a hall sensor that can detect whether the user is proximate (e.g., less than 10 mm) to the sensor or whether the user is contacting the computing device 110 (e.g., contacting and/or blocking a certain component of the device used/configured for wireless communication). The sensors 115 may detect a proximity of the user with respect to the computing device 110, and can generate a sensor measurement data indicating the detected proximity.

In some implementations, the sensors 115 include electronic components or a combination of electronic components and software components that can operate to sense/determine/measure a location and/or an orientation of the computing device 110. Examples of the sensors 115 can include: one or more imaging sensors, one or more accelerometers, one or more gyroscopes, one or more magnetometers, or any other suitable type of sensor(s) that detects motion and/or location. For example, one or more accelerometers can measure translational movement (e.g., forward/back, up/down, left/right) and one or more gyroscopes can measure rotational movement (e.g., pitch, yaw, roll). In some implementations, the sensors 115 detect the translational movement and the rotational movement, and determine an orientation and location of the computing device 110. The sensor 115 may include one or more eye-tracking sensors to detect the movement of a user's eyes. The sensors 115 may generate sensor measurements indicating the detected location and orientation of the computing device 110.

In some implementations, wireless communication interfaces 125 include electronic components or combinations of electronic components and software components that communicate with another device through wireless communication links (e.g., communication link 814, 816, 818). In some implementations, the wireless communication interfaces 125 include a wireless interface for a cellular communication link (e.g., 3G, 4G, LTE communication link). The wireless communication interfaces 125 may also include a wireless interface for a different communication link (e.g., Wi-Fi or Bluetooth communication link). In some implementations, wireless communication interfaces 125 include or are embodied as transceivers or communication modems coupled to the transceivers for transmitting and receiving data through wireless mediums. The wireless communication interfaces 125 may transmit or receive sensor measurement data indicating locations and orientations of the computing device 110. Moreover, the wireless communication interface 125 may transmit or receive image data indicating or corresponding to images to be rendered.

In some implementations, the processor 130 includes an electronic component or a combination of an electronic component that can execute instructions stored by the non-transitory computer readable medium 132. The processor 130 may include one or more central processing units (CPUs), graphical processing units (GPUs) or a combination of them. The non-transitory computer readable medium 132 may store instructions for executing one or more applications executable by the processor 130.

One example application when executed by the processor 130 may cause the processor 130 to generate or process content for rendering. The processor 130 executing the application may cause the processor 130 to generate image data for rendering, according to sensor measurement data from the sensors 115 or the wireless communication interfaces 125. For example, the processor 130 executing the application may determine a view of the artificial reality corresponding to detected location and orientation in the sensor measurement data and generate image data of the determined view of the artificial reality.

Example applications when executed by the processor 130 may cause the processor 130 to control or adjust the wireless communication interface 125. Example applications include wireless interface controller 134.

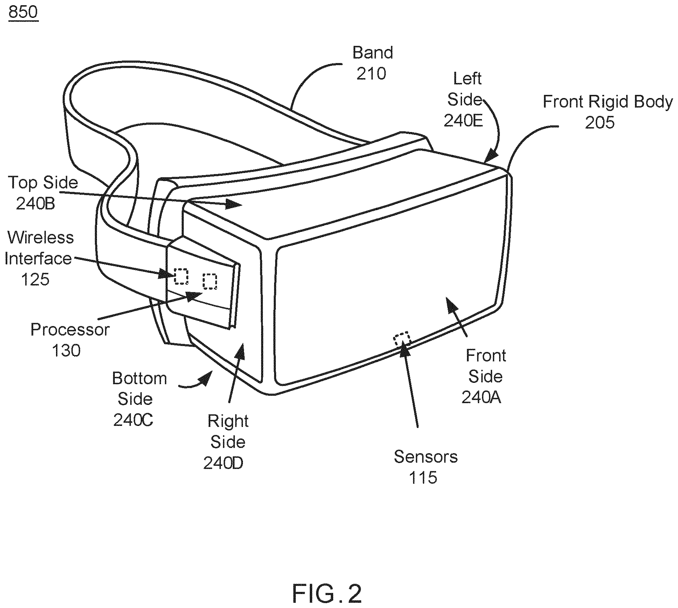

FIG. 2 is a diagram of the HWD 850, in accordance with an example implementation. In some implementations, the HWD 850 includes a front rigid body 205 and a band 210. The front rigid body 205 includes the display 145 (not shown in FIG. 2), lens (not shown in FIG. 2), the sensors 115, the wireless communication interface 125, and the processor 130. In the implementation shown by FIG. 2, the wireless communication interface 125, the processor 130, and the sensors 115 are located within the front rigid body 205, and may not be visible to the user. In other implementations, the HWD 850 has a different configuration than shown in FIG. 2. For example, the wireless communication interface 125, the processor 130, and/or the sensors 115 may be in different locations than shown in FIG. 2.

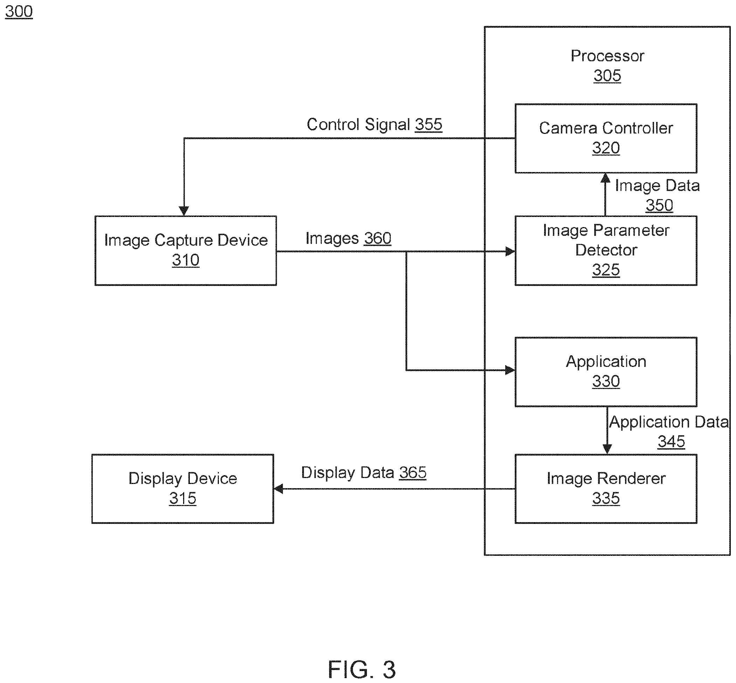

FIG. 3 is a diagram of a system 300. The system 300 can incorporate features of and/or be used to implement various systems and devices described herein, including but not limited to the wearable devices 100, 850. The system 300 can manipulate camera operation based on environmental conditions. For example, the system 300 can include an image capture device 310 (e.g., coupled with HWD device 100) which can operate in two or more modes of operation. In some implementations, the system 300 can select the mode of operation according to one or more conditions, such as environmental conditions, power usage conditions, power availability conditions, processor and/or memory usage, or various combinations thereof.

For example, the image capture device 310 can operate in a first mode contingent on environmental conditions, such as adequate lighting in the environment. Responsive to detecting that the lighting in the environment is not adequate, the image capture device 310 can operate in the second mode at least until the environmental conditions have met a threshold for return to the first mode. The system 300 can also time the changeover from one mode to another to reduce image flicker seen by the user. As compared with systems which do not implement this automatic mode shifting, systems and methods in accordance with the present disclosure can reduce overall image flicker and blur while providing a seamless user experience. This can enable the system 300 to reduce power loss and waste of computational resources as blurry images and flicker may not need to be removed during post-processing applications.

The system 300 can include one or more processors 305, one or more image capture devices 310, and/or one or more display devices 315. The processor 305, the image capture device 310, and/or the display device 315 can be included, disposed within, or otherwise coupled with a wearable housing, such as the HWD device 100. In some implementations, the image capture device 310 can capture images that the processor 305 can present using (or use to render display data for presentation using) the display device 315. The processor 305 can control operation of the image capture device 310 based at least on the captured images.

As depicted in FIG. 3, the system 300 can include the at least one image capture device 310. The image capture device 310 can be a camera or video capture device. The image capture device 310 can include one or more camera sensors. The camera sensors may detect light to signal to the image capture device 310 to capture one or more images 360. The image capture device 310 can capture the images 360 in one or more methods, such as point and shoot or image tracking. The image capture device 310 can include operation parameters or settings which can affect the images 360.

The operation parameters can include at least one of gain, exposure, aperture, or frame rate, or various combinations thereof. The gain of the image capture device 310 can represent an amplification of the signal from the camera sensors and can relate to the apparent brightness of an image 360. The exposure time can represent an amount of time the sensors are exposed (e.g., to the light in the environment). The aperture can represent the size (e.g., diameter) of an opening to let light into the camera sensors. The frame rate can refer to the speed at which the images 360 are captured or displayed by the image capture device 310 or the display device 315, respectively. The frame rate can be correlated with the exposure (e.g., shutter speed). Each of these operation parameters may influence the other, may influence the images 360, and may be impacted by the environment, including ambient light or light from the system 300. The operation parameters can be predetermined, or the operation parameters can change based at least on the images 360 or the processor 305. The operation parameters can change periodically or as a result from a change from the processor 305.

The image capture device 310 can operate in one or more modes of operation. The mode of operation can correspond to a value of one or more of the operation parameters of the image capture device 310, such as one or more values for operation parameters of the image capture device 310 that can be controlled by the processor 305 (e.g., the processor 305 can provide at least one of a signal identifying a mode of operation or a signal identifying the one or more values of the one or more operation parameters to the image capture device 310 to cause the image capture device 310 to operate according to the identified mode and/or identified one or more values). In some implementations, a first mode may include a higher frame rate, such as 100 or 120 Hz, than a second mode with a lower frame rate, such as 50 or 60 Hz. In some implementations, the image capture device 310 may change between the modes based at least upon the environmental conditions or the images 360.

The image capture device 310 can capture the images 360 (e.g., within the environment) and transmit the images 360 to the processor 305. The processor 305 can be any combination of hardware and software for performing the operations described herein. The processor 305 can be similar or identical to the processor 130. The processor 305 can include an image parameter detector 325 and an application 330. The image capture device 310 can transmit the images 360 to the image parameter detector 325 and the application 330 via a network (e.g., LAN, WAN, Bluetooth) or via a hardwired connection (such as within the HWD device 100). Responsive to receiving the images 360, the image parameter detector 325 can evaluate the images 360 to identify one or more image parameters.

The image parameters can indicate the relative brightness or darkness of an image. The image parameters can include a frame brightness or intensity, a signal to noise ratio (SNR) of the image, or a sharpness of the image, among others. The brightness, for example, can indicate a perception or expected perception of light, such as a perception of the intensity and/or luminance of the image. The frame brightness can change at least based on environmental conditions. An example of an environmental condition can be a low light condition. A low light condition can refer to an environment in which the ambient light is not sufficient to capture the images 360 at a desired frame brightness and at a specified mode of operation for the image capture device 310. The desired frame brightness can be part of a threshold for determining the mode of operation of the image capture device 310.

In some implementations, the image parameter detector 325 evaluates the images 360 to determine if one or more of the images 360 or image data thereof meets the threshold, and can output an indication of whether the image data meets the threshold. The threshold can relate to one or more of the image parameters (e.g., frame brightness, SNR, sharpness), operating parameters (e.g., gain, exposure, aperture), or a combination thereof. In some implementations, the system 300 controls operation of the image capture device 310 to meet a threshold frame brightness within environmental conditions. For example, the image parameter detector 325 can evaluate the images 360 for meeting a threshold frame brightness. The frame brightness, as well as other image parameters, can be related to the operation parameters of the image capture device 310. Meeting a threshold frame brightness can refer to the image being darker than the threshold, brighter than the threshold, or being at the threshold.

The threshold can be dynamic. The threshold can be related to at least the image parameters, the operating parameters, or a combination thereof. The threshold can change responsive to the environmental conditions, or responsive to the operation mode of the image capture device 310, among others. The threshold can exhibit hysteresis. For example, the threshold can change depending on the operation mode of the image capture device 310, the environmental conditions, or the image parameters. For example, the threshold may be higher for the first mode of the image capture device 310 than it is for the second mode of the image capture device 310. The threshold can include a range. The threshold may include an upper threshold and a lower threshold for the same operating or image parameter. In this manner, the upper and lower threshold of the same parameter can create a range. In some implementations, the image parameter detector 325 can determine if the one or more image parameters of the image 360 meets a corresponding threshold for the one or more image parameters. The image parameter detector 325 may determine that the image 360 satisfies a first threshold associated with the operating parameters and a second threshold associated with the image parameters. For example, the image parameter detector 325 may determine that the image 360 meets the threshold if the frame brightness of the image 360 is below a first threshold and the gain and exposure of the image capture device 310 is between or at a threshold range indicated by a lower threshold and a higher threshold for gain and exposure.

This introduction of hysteresis can reduce flicker caused by parameters of the system 300 hovering around a threshold value. A range of thresholds can help to eliminate excessive switching between two or more different modes of camera operation when the operating parameters or the image parameters are toeing the threshold.

The image parameters can be related to the operation parameters of the image capture device 310. For example, the image parameter detector 325 can evaluate an image for its frame brightness, which can be related to the image capture device's gain and exposure. As an illustrative example, as frame brightness decreases (e.g., as a result of a low light condition), a product of gain and exposure of the image capture device 310 may increase to maintain the frame brightness below the threshold. In this example, the gain and exposure of the image capture device 310 can increase to a point of saturation of the image, or until the image meets the threshold for frame brightness. In this manner, the exposure and gain can be used to maintain the frame brightness below the threshold, despite environmental conditions.

In some implementations, the image parameter detector 325 can evaluate the image parameters to determine a model of environmental conditions, such as to determine predicted or expected values of one or more environmental conditions at a future point in time, which can facilitate controlling operation of the image capture device 310 in a predictive manner according to the values of the environmental conditions at the future point in time. For example, the image parameter detector 325 may accumulate image parameter data to create an artificial intelligence predictive model. The model may be or include neural networks, decision trees, multivariate regression analysis, or other predictive models. The model may indicate how image parameters will change based on environmental conditions, operating parameters, or time, among others. For example, the model may estimate that a second image transmitted later than a first image may have a lower frame brightness than the first image. The model may adapt based at least upon the images 360 associated with the operating parameters. The model may predict whether an image of the images 360 meets a threshold. The image parameter detector 325 can create an evaluation, with or without the model, indicating whether the one or more image parameters of the images 360 meets the threshold.

The image parameter detector 325 can transmit image data 350 to a camera controller 320. The camera controller 320 can receive, from the image parameter detector 325, the indication of whether the image data 350 (e.g., one or more parameters of images 360) meet the threshold, responsive to the evaluation of the image data 350 by the image parameter detector 325. The processor 305 can operate the camera controller 320 to control the mode of the image capture device 310 based at least on the evaluation. The camera controller 320 can transmit a control signal 355 that contains instructions for the image capture device 310 to run in a specified mode. The mode can be determined from the image data 350 containing the evaluation. The evaluation can indicate in which mode to operate the image capture device 310.

The mode to operate the image capture device 310 in can be dependent on the mode in which the image capture device 310 is currently operating. For example, if the image capture device 310 is operating in the first mode corresponding to a high frame rate (e.g., 120 Hz), the camera controller 320 can transmit the control signal 355 based on the evaluation. The camera controller 320 can maintain the first mode or change to the second mode responsive to receiving the evaluation. The evaluation may indicate that one or more image parameters meets the threshold. In some implementations, the camera controller 320 can send the control signal 355 to cause the image capture device 310 to change to the second mode responsive to the evaluation indicating that the image parameters meet the threshold. In other words, the image parameter detector 325 determining that the image parameters meet the threshold can cause the image capture device 310 to change from a higher frame rate to a lower frame rate. In some implementations, the evaluation can indicate that the image parameters meet a threshold frame brightness. The frame brightness of the image can be affected by a low light condition. Responsive to meeting the threshold frame brightness caused by the low light condition, the camera controller 320 can transmit the control signal 355 to cause the image capture device 310 to transition from the first mode (high frame rate) to the second mode (low frame rate).

If the image capture device 310 is operating in the second mode (lower frame rate), the image data 350 may indicate that the image capture device 310 is to continue in the second mode, or is to change to a third mode. For example, if the gain and exposure meets a threshold gain and exposure for the second mode and the frame brightness also meets the threshold, the camera controller 320 may cause, via the control signal 355, the image capture device 310 to return to the first mode. If the gain and exposure do not meet a threshold gain and exposure and/or the frame brightness does not meet the threshold frame brightness, the camera controller 320 can transmit the control signal 355 with instructions to the image capture device 310 to maintain the current mode.

The camera controller 320 can generate the control signal 355 to include instructions for changing the mode of the image capture device 310, such as to reduce or mitigate flicker. Flicker can be caused during a transition of modes due to at least a change in exposure, image alignment, or timing. For example, an abrupt change in exposure during a mode transition can cause a user to notice a bright flash or dimness. To mitigate this, the camera controller 320 can indicate in its control signal 355 to maintain the same or a similar exposure while switching modes. Furthermore, in implementations with more than one image capture device 310, the camera controller 320 can maintain alignment of the images captured by each image capture device 310 prior to and subsequent to causing the image capture devices 310 to change modes.

The camera controller 320 can include in the control signal 355 instructions to not transition modes until a specified time. The specified time to transition can correlate to the frame rate and/or exposure of the image capture device 310. For example, the transition may occur at the end of a sequence of the images 360. As an illustrative example, if the sequence of the images 360 takes 66.666 ms to complete and the transition is indicated at the beginning of the sequence, it may be 66.666 ms until the mode transitions. This can be a 4-frame delay at 60 Hz, or an 8-frame delay at 120 Hz. In some implementations, the image capture device 310 may transition modes at the beginning of the sequence, the end of the sequence, or during the sequence. The camera controller 320 may include in the control signal 355 instructions to introduce a gap between the images 360 during a transition. For example, during a transition from a high frame rate mode to a low frame rate mode, it may be desirable to introduce gaps to ease the transition. As an illustrative example, when transitioning from 120 Hz to 60 Hz, the system 300 may introduce a gap at the end of the sequence of the images 360 equal to 50% of a 120Hz frame (4.3ms) before switching to the 60 Hz frame rate.

The system 300 can iteratively accept feedback from the images 360 continuously transmitted from the image capture device 310. In this manner, the image parameter detector 325 can continuously evaluate the image parameters for adherence to the threshold and the camera controller 320 can continuously control the mode of the image capture device 310. In addition to transmitting the images 360 to the image parameter detector 325 of the processor 305, the image capture device 310 can concurrently, subsequently, or beforehand transfer the images 360 to an application 330 of the processor 305.

The application 330 can be a software application for performing features associated with the HWD device 100. The application 330 may execute on the processor 305, the processor 130, or another computing device internal or external to the system. The application 330 can receive the images 360 from the image capture device 310. The application 330 may process the images 360 for transmittal to an image renderer 335. Processing the images 360 may include filtering, correction, alignment, removal of bad images, among others. The application 330 may generate artificial images. The application 330 may encode the images 360 as application data 345 for transmittal to the image renderer 335.

The image renderer 335 may receive the application data 345 from the application 330 and may generate display data 365 for presentation of the images 360 via the display device 315. The image renderer 335 may be included as one of the operations of the processor 305. The image renderer 335 may render the display data 365 for presentation by the display device 315. The display data 365 can be encoded in data packets for transmission (wired or wirelessly, such as via Bluetooth, Wi-Fi, etc.) to the display device 315 for presentation. The display data 365 can include data packets, bits, code, etc., which include instructions for a display device to present at least an image, hologram, video, or other presentation to the user of the HWD device 100. The display data 365 can include the images 360, artificial images generated by the application 330, or text, among others. The display data can be presented 2-dimensionally or 3-dimensionally. The display data can be encoded as a video format (e.g., QuickTime, MP4), picture format (e.g., JFIF, GIF), or other formats suitable for display of 3D graphics (e.g., X3D, gITF, O3D).

The display device 315 can present the display data 365. The display device 315 can be any hardware or software for displaying a presentation, such as the display 145. The presentation can include the images 360 encoded as the display data 365. The display device 315 can be or include a screen (e.g., LCD or LED), hologram, projection, or other display means for presenting the display data 365.

By implementing various control schemes described herein, the system 300 can improve performance (e.g., accuracy) of computer vision operations including but not limited to tracking operations, and can also reduce device power consumption and improve the efficiency of usage of computational resources. Such operations can allow the system 300 to reduce flicker, noise, and/or blur in images. Automatic switching between modes of the image capture device 310 can enable a high frame rate to enhance image presentation while allowing for a lower frame rate based on the environmental conditions.

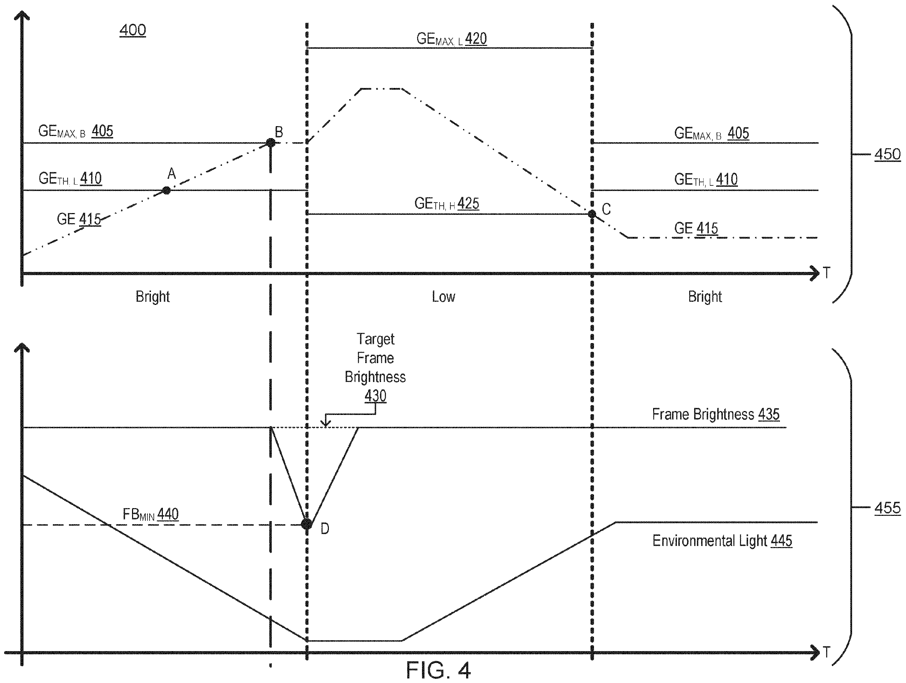

FIG. 4 depicts a diagram 400 of an example change of camera operation based on environmental conditions. The diagram 400 shows examples of threshold curves of image parameters and operation parameters, which the system 300 can use to trigger switching between the first, higher frame rate and the second, lower frame rate mode. The diagram 400 shows a multitude of thresholds, including GEMAX, B 405 (which can represent a maximum possible gain times exposure product for the system 300 while operating in the first mode), GETH, L 410 (which can represent a threshold to control transitioning from the second mode to the first mode), GEMAX, L 420 (which can represent a maximum gain times exposure product for the system 300 while operating in the second mode), GETH, H 425 (which can represent a threshold to control transitioning from the first mode to the second mode), and FBMIN (which can represent a minimum target frame brightness to monitor in order to control the operation in the first mode and/or second mode as appropriate). Diagram 400 depicts a region 450 of the diagram in which the gain and exposure of the image capture device are mapped, and region 455 in which the environmental light 445 and the frame brightness 435 are mapped.

The environmental light 445 can be the ambient light in the environment in which the system operates. For example, the environmental light can be bright or low. A bright environmental light can refer to an environment with more light intensity (e.g., in lux or mW/cm2), than a low environmental light. In some implementations, the gain, exposure, or a combination thereof (e.g., a sum, product, or other operation of gain and exposure) of the image capture device can increase in response to a reducing environmental light 445. As an illustrative example, a gain and exposure product (GE) 415 can increase in region 450 as the environmental light 445 decreases in region 455. In some implementations, the GE 415 may increase to a point of saturation B. The point of saturation B can be reached when the operation parameters of the image capture device are at a maximum value.. At or after exposure saturation the images can appear dark, blurry, or otherwise low quality and may be difficult to decipher with the human eye. If the environmental light decreases further while the GE 415 has reached the point of saturation B, then the frame brightness 435 of the image may decrease. In some implementations, the frame brightness 435 can decrease until a frame brightness minimum (FBMIN) 440 at point D.

If the frame brightness 435 reaches point D, indicating image underexposure, the system can determine to switch the mode of the image capture device. The system can make the determination through an evaluation of the thresholds. For example, if the GE 415 is operating in the first mode (higher frame rate) when the frame brightness drops to point D, the system can evaluate if other thresholds have been met. The system may evaluate if the GE 415 has met the threshold for a low light environment, GETH, L 410. In some implementations, if the GE 415 has met the GETH, L 410 and the frame brightness 435 decreases to the FBMIN, the system may determine to change the mode of the image capture device. In some implementations, if the GE 415 has met the GETH, L 410 and the frame brightness 435 decreases to below a target frame brightness 430, the system may determine to change the mode of the image capture device from the first mode to the second mode. Transitioning from the first mode to the second mode may cause the frame brightness 435 to return to or near the target frame brightness 430.

When operating in the second mode, the system may be subject to or make determinations for a mode transition from different thresholds than those used in the first mode. For example, the second mode may include the minimum threshold of the gain and exposure product, GETH, H 425 and the maximum threshold of the gain and exposure product GEMAX, L 420 different from the thresholds of the first mode. In some implementations, the system may operate in the second mode until the GE 415 reaches the GETH, H 425. Region 450 can further depict the GE 415 decreasing while the environmental light 445 increases in region 455. Responsive to the GE 415 decreasing to the GETH, H 425 (e.g., at point C), the system 300 can determine to transition to the first mode.

The diagram 400 depicts multiple thresholds for determining which mode the image capture device may operate in. These multiple thresholds exhibit a hysteresis for the system. This hysteresis can prevent rapid cycling between modes which may be detrimental to components of the system or the user experience. The thresholds depicted herein can be dynamic. The two modes described herein are illustrated and can be expanded to any number of modes. Likewise, the GE 415 and the frame brightness 435 can be exemplary of any operating parameter or image parameter, respectively.

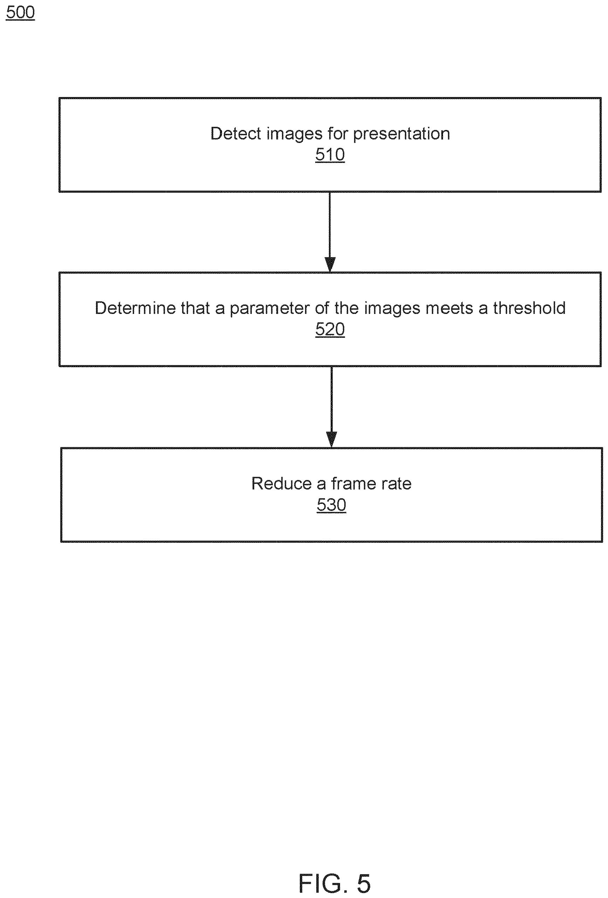

FIG. 5 depicts a flowchart 500 showing a method of manipulating camera operation based on environmental conditions. The method 500 can include act 510, wherein the system can capture images for presentation; act 520, wherein the system can determine that a parameter of the images meets a threshold; act 530, wherein the system can reduce a frame rate. The method 500 can include more or fewer acts than those described herein.

At act 510, the system can capture one or more images. The system can capture images, for example, using the image capture device 310. The images can be sent at least one by one, as a sequence of images, or within a data packet, with or without an acknowledgement by the processor. The images (e.g., images 360) can include photos or videos of the environment surrounding the system. The images can have image parameters, such as a brightness of the frame (e.g., image), a sharpness, or a blurriness, among others.

At act 520, the system determines that a parameter of the images meets a threshold. The system can determine that the parameter meets a threshold, for example, using the image parameter detector 325. One or more parameters can meet one or more thresholds. For example, there may be a first parameter related to the frame brightness of the image and a second parameter related to the sharpness of the image. A threshold may have an upper and lower limit. For example, the first parameter may be under a lower threshold, between a lower and upper threshold, or above the upper threshold.

Determining that a parameter of the images meets a threshold can include determining for each image that the image meets one or more thresholds, or determining that a group of images meets one or more thresholds. Determining that a group of images meets one or more thresholds can refer to a majority of the images of the group meet the threshold, or that a predetermined number of the images (or a percentage of the images) meets the threshold. The system can determine that a group of images meets the threshold concurrently, one after the other, or in any other order or sequence.

Responsive to determining that a parameter of the images meets a threshold, the system can transmit the images, data related to the images, or an evaluation of the images to a controller, such as the camera controller 320. The evaluation can include information pertaining to the images, their parameters, and the thresholds. The system can control the image capture device using at least the information contained within the evaluation.

At act 530, the system reduces a frame rate. The system can control the image capture device to reduce a frame rate. The system can reduce the frame rate responsive to determining that a parameter of the images meets a threshold. For example, the system can reduce the frame rate of the image capture device responsive to determining that a brightness of the images meets a threshold. The brightness of the images can correspond to an environmental condition such as a low light condition. In some implementations, the system can reduce the frame rate of the image capture device responsive to determining that a brightness of the images meets a threshold, and that the product of the gain and exposure of the image capture device meets a threshold.

The system can take other control actions besides reducing a frame rate. The system can increase a frame rate of the image capture device. The system may increase a frame rate of the image capture device responsive to a determination that the image parameters meet a different threshold than the threshold to reduce the frame rate. In some implementations, the system may not change a frame rate of the display device. The system may not change a frame rate of the display device if, for example, the image parameters do not meet a threshold, there is a manual override of the system, the images being displayed necessitate presentation in a certain frame rate, among other reasons.

The system may change other operating parameters of the image capture device. The system may control at least the exposure, gain, aperture, shutter speed, or focal point of the image capture device. The system may control more than one image capture device. The system may implement the same control for each image capture device, different controls for each image capture device, or the same control for subsets of the image capture devices. A control can include no action. The system may maintain alignment of images before, during, and after a transition between frame rates or changes to other operating parameters.

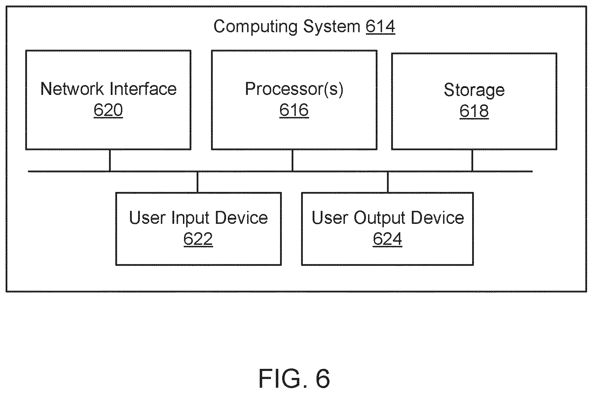

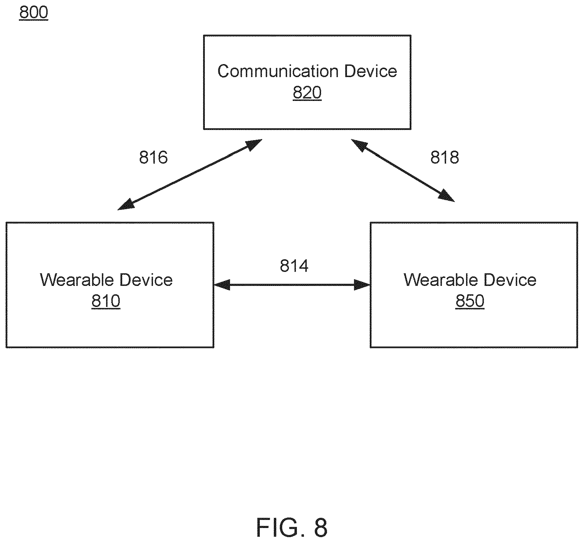

Various operations described herein can be implemented on computer systems. FIG. 6 shows a block diagram of a representative computing system 614 usable to implement implementations of the present disclosure. In some implementations, the wearable device 810 of FIG. 8 is implemented by the computing system 614. The computing system 614 can be implemented, for example, as a consumer device such as a smartphone, other mobile phone, tablet computer, wearable computing device (e.g., a smart watch, eyeglasses, a head wearable display), desktop computer, laptop computer, or implemented with distributed computing devices. The computing system 614 can be implemented to provide VR, AR, MR experience. In some implementations, the computing system 614 can include conventional computer components such as processors 616, storage device 618, network interface 620, user input device 622, and user output device 624.

The network interface 620 can provide a connection to a wide area network (e.g., the Internet) to which WAN interface of a remote server system is also connected. The network interface 620 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The user input device 622 can include any device (or devices) via which a user can provide signals to the computing system 614, which can interpret the signals as indicative of particular user requests or information. The user input device 622 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

The user output device 624 can include any device via which the computing system 614 can provide information to a user. For example, the user output device 624 can include a display (not depicted) to display images generated by or delivered to the computing system 614. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that functions as both input and output device can be used. The user output devices 624 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this disclosure can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, the processors 616 can provide various functionality for the computing system 614, including any of the functionality described herein as being performed by a server or client, or other functionality associated with message management services.

It will be appreciated that the computing system 614 is illustrative and that variations and modifications are possible. Computer systems used in connection with the present disclosure can have other capabilities not specifically described here. Further, while the computing system 614 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

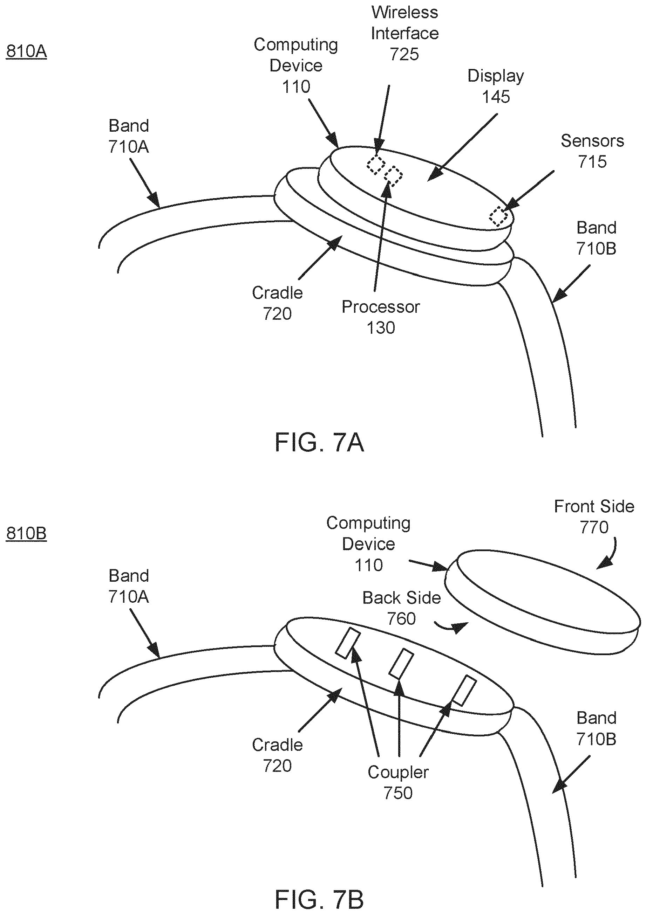

FIG. 7A is a diagram showing a perspective view of the wearable device 810A (e.g., wearable device 810 in a state 810A) including a computing device 110 attached to a cradle 720, according to an example implementation of the present disclosure. The processor 130, the wireless communication interface 125 and the sensors 115 may be disposed within a housing of the computing device 110, such that the processor 130, the wireless communication interface 125 and the sensors 115 may not be visible to the user. The computing device 110 may also include the display 145 on a front side 770 to present text or image. The computing device 110 may be detachable from the cradle 720 as shown in FIG. 7B (e.g., wearable device 810 in state 810B). The computing device 110 may be detached from the cradle 720 to allow the user to charge the battery of the computing device 110, connect to another device through a cable, or capture an image, etc. The cradle 720 may be a wearable structure or a component to selectively hold, contain, connect, grasp and/or couple the computing device 110. The cradle 720 may include one or more couplers 750, to which a back side 760 or other portion of the computing device 110 can be attached. One or more couplers 750 may include mechanical latches, magnetics, hook and loop fasteners, or any component(s) that allow the cradle 720 to selectively hold or couple the computing device 110. The cradle 720 may include or may be attached to wrist bands 71 0A, 720B.

FIG. 8 is a block diagram of an example system 800. In some implementations, the system 800 includes a communication device 820, a wearable device 810, and a wearable device 850. The wearable device 810 may be a smart watch, and the wearable device 850 may be a head wearable device (HWD) 850. The communication device 820 may be an access point or any other communication device. The HWD 850 may be referred to as, include, or be part of a head mounted display (HMD), head mounted device (HMD), head worn display (HWD) or head worn device (HWD). The wearable device 810 and the HWD 850 may communicate with each other through a communication link 814. The wearable device 810 and the communication device 820 may communicate with each other through a communication link 816, and the wearable device 850 and the communication device 820 may communicate with each other through a communication link 818. Through the wireless links 816, 818, the wearable devices 810, 850 may access content (e.g., text, image, audio, video, etc.) from other devices. The communication links 814, 816, 818 may be wireless links (e.g., cellular link, Wi-Fi link, Bluetooth link, 60 GHz link, ultra wideband link, etc.). The communication links 814, 816, 818 may be based on the same protocol or different protocols. For example, the communication links 816, 818 may conform to the 3G, 4G, 5G, LTE, 60 GHz protocol, where the communication link 814 may conform to the Wi-Fi link, Bluetooth, etc. In some implementations, the system 800 includes more, fewer, or different components than shown in FIG. 8.

In one aspect, the wearable device 810 and the wearable device 850 may operate together to provide/support artificial reality for a user. In one example, the wearable device 850 may detect a location and an orientation of the wearable device 850, and generate a sensor measurement indicating the detected location and orientation of the wearable device 850. The wearable device 850 may transmit the sensor measurement to the wearable device 810 through the communication link 814. The wearable device 810 may receive the sensor measurement, and may generate or determine a view of the artificial reality corresponding to the detected location and orientation of the wearable device 850. The wearable device 810 may generate image data of the determined view of the artificial reality, and transmit the image data to the wearable device 850 through the communication link 814. The HWD 850 may receive the image data, and can present an image of the artificial reality to a user according to the image data. In one aspect, the process of detecting the location and the orientation of the HWD 850, and rendering the image to the user should be performed within a frame time (e.g., 11 ms or 16 ms). Any latency between a movement of the user wearing the HWD and an image displayed corresponding to the user movement can cause judder, which may result in motion sickness and can degrade the user experience.

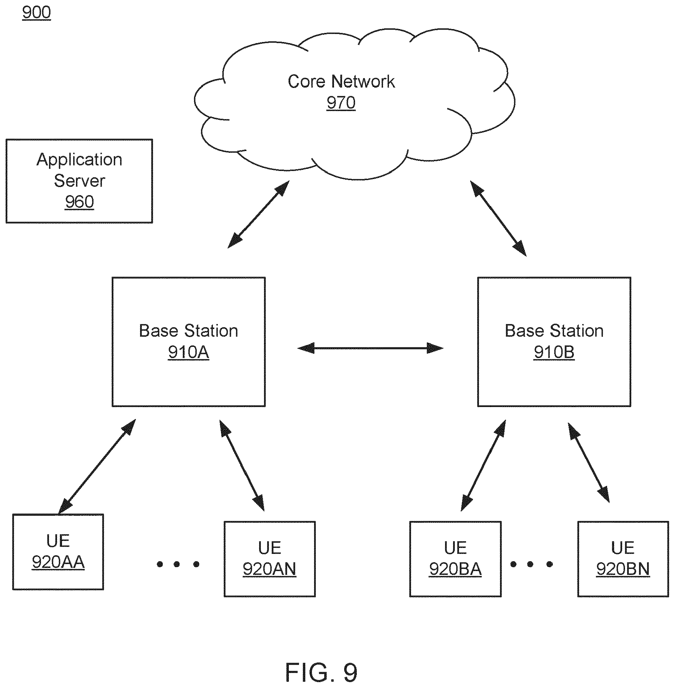

FIG. 9 illustrates an example wireless communication system 900. The wireless communication system 900 may include base stations 91 0A, 910B (also referred to as "wireless communication nodes 910" or "stations 910") and user equipments (UEs) 920AA... 920AN, 920BA...920BN (also referred to as "wireless communication devices 920" or "terminal devices 920"). The wireless communication link may be a cellular communication link conforming to 3G, 4G, 5G or other cellular communication protocols. In one example, the wireless communication link supports, employs or is based on an orthogonal frequency division multiple access (OFDMA). In one aspect, the UEs 920AA... 920AN are located within a geographical boundary with respect to the base station 91 0A, and may communicate with or through the base station 910A. Similarly, the UEs 920BA...920BN are located within a geographical boundary with respect to the base station 910B, and may communicate with or through the base station 910B. A network between UEs 920 and the base stations 910 may be referred to as radio access network (RAN). In some implementations, the wireless communication system 900 includes more, fewer, or different number of base stations 910 than shown in FIG. 9.

In some implementations, the UE 920 may be a user device such as a mobile phone, a smart phone, a personal digital assistant (PDA), tablet, laptop computer, wearable computing device (e.g., head mounted display, smart watch), etc. Each UE 920 may communicate with the base station 910 through a corresponding communication link. For example, the UE 920 may transmit data to a base station 910 through a wireless communication link (e.g., 3G, 4G, 5G or other cellular communication link), and/or receive data from the base station 910 through the wireless communication link (e.g., 3G, 4G, 5G or other cellular communication link). Example data may include audio data, image data, text, etc. Communication or transmission of data by the UE 920 to the base station 910 may be referred to as an uplink communication. Communication or reception of data by the UE 920 from the base station 910 may be referred to as a downlink communication.

In some implementations, the base station 910 may be an evolved node B (eNB), a serving eNB, a target eNB, a femto station, or a pico station. The base station 910 may be communicatively coupled to another base station 910 or other communication devices through a wireless communication link and/or a wired communication link. The base station 910 may receive data (or a RF signal) in an uplink communication from a UE 920. Additionally or alternatively, the base station 910 may provide data to another UE 920, another base station, or another communication device. Hence, the base station 910 allows communication among UEs 920 associated with the base station 910, or other UEs associated with different base stations.

In some implementations, the wireless communication system 900 includes a core network 970. The core network 970 may be a component or an aggregation of multiple components that ensures reliable and secure connectivity to the network for UEs 920. The core network 970 may be communicatively coupled to one or more base stations 910A, 910B through a communication link. A communication link between the core network 970 and a base station 910 may be a wireless communication link (e.g., 3G, 4G, 5G or other cellular communication link) or a wired communication link (e.g., Ethernet, optical communication link, etc.). In some implementations, the core network 970 includes user plane function (UPF), access and mobility management function (AMF), policy control function (PCF), etc. The UPF may perform packet routing and forwarding, packet inspection, quality of service (QoS) handling, and provide external protocol data unit (PDU) session for interconnecting data network (DN). The AMF may perform registration management, reachability management, connection management, etc. The PCF may help operators (or operating devices) to easily create and seamlessly deploy policies in a wireless network. The core network 970 may include additional components for managing or controlling operations of the wireless network. In one aspect, the core network 970 may receive a message to perform a network congestion control, and perform the requested network congestion control. For example, the core network 970 may receive explicit congestion notification (ECN) from a base station 910 and/or a UE 920, and perform a network congestion control according to the ECN. For example, the core network 970 may adjust or control an amount of data generated, in response to the ECN. Additionally or alternatively, the core network 970 may adjust or control an amount of data transmitted and/or received, in response to the ECN.

In some implementations, the wireless communication system 900 includes an application server 960. The application server 960 may be a component or a device that generates, manages, or provides content data. The application server 960 may be communicatively coupled to one or more base stations 910A, 910B through a communication link. A communication link between an application server 960 and a base station 910 may be a wireless communication link (e.g., 3G, 4G, 5G or other cellular communication link) or a wired communication link (e.g., Ethernet, optical communication link, etc.). In one aspect, an application server 960 may receive a request for data from a UE 920 through a base station 910, and provide the requested data to the UE 920 through the base station 910. In one aspect, an application server 960 may receive a message to perform a network congestion control, and perform the requested network congestion control. For example, the application server 960 may receive explicit congestion notification (ECN) from a base station 910, a UE 920, or a core network 970, and perform a network congestion control according to the ECN. For example, the application server 960 may adjust or control an amount of data generated, in response to the ECN. Additionally or alternatively, the application server 960 may adjust or control an amount of data transmitted and/or received, in response to the ECN.

In some implementations, communication among the base stations 910, the UEs 920, application server 960, and the core network 970 is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layers.

In some implementations, the base station 910 includes a wireless interface, a processor, a memory device, and one or more antennas. These components may be embodied as hardware, software, firmware, or a combination thereof. For example, the base station 910 may include an electronic display and/or an input device. For example, the base station 910 may include additional antennas and wireless interfaces.

In some implementations, the system 900 can include an antenna (not pictured). The antenna may be a component that receives a radio frequency (RF) signal and/or transmits a RF signal through a wireless medium. The RF signal may be at a frequency between 200 MHz to 100 GHz. The RF signal may have packets, symbols, or frames corresponding to data for communication. The antenna may be a dipole antenna, a patch antenna, a ring antenna, or any suitable antenna for wireless communication. In one aspect, a single antenna is utilized for both transmitting a RF signal and receiving a RF signal. In one aspect, different antennas are utilized for transmitting the RF signal and receiving the RF signal. In one aspect, multiple antennas are utilized to support multiple-in, multiple-out (MIMO) communication.

The antenna may be a component that receives a radio frequency (RF) signal and/or transmits a RF signal through a wireless medium. The antenna may be a dipole antenna, a patch antenna, a ring antenna, or any suitable antenna for wireless communication. In one aspect, a single antenna is utilized for both transmitting a RF signal and receiving a RF signal. In one aspect, different antennas 218 are utilized for transmitting the RF signal and receiving the RF signal. In one aspect, multiple antennas 218 are utilized to support multiple-in, multiple-out (MIMO) communication.

The wireless interface includes or is embodied as a transceiver for transmitting and receiving RF signals through one or more antennas. The wireless interface may communicate with a wireless interface of the UE 920 through a wireless communication link. In one configuration, the wireless interface is coupled to one or more antennas. In one aspect, the wireless interface may receive the RF signal at the RF frequency received through antenna, and downconvert the RF signal to a baseband frequency (e.g., 0-1 GHz). The wireless interface may provide the downconverted signal to the processor. In one aspect, the wireless interface may receive a baseband signal for transmission at a baseband frequency from the processor, and upconvert the baseband signal to generate a RF signal. The wireless interface may transmit the RF signal through the antenna.

The processor is a component that processes data. The processor may be embodied as FPGA, ASIC, a logic circuit, etc. The processor may obtain instructions from the memory device 216, and execute the instructions. In one aspect, the processor may receive downconverted data at the baseband frequency from the wireless interface, and decode or process the downconverted data. For example, the processor may generate audio data or image data according to the downconverted data. In one aspect, the processor may generate or obtain data for transmission at the baseband frequency, and encode or process the data. For example, the processor may encode or process image data or audio data at the baseband frequency, and provide the encoded or processed data to the wireless interface for transmission. In one aspect, the processor may set, assign, schedule, or allocate communication resources for different UEs 120. For example, the processor may set different modulation schemes, time slots, channels, frequency bands, etc. for UEs 920 to avoid interference. The processor may generate data (or UL CGs) indicating configuration of communication resources, and provide the data (or UL CGs) to the wireless interface for transmission to the UEs 920.

The memory device is a component that stores data. The memory device may be embodied as RAM, flash memory, ROM, EPROM, EEPROM, registers, a hard disk, a removable disk, a CD-ROM, or any device capable for storing data. The memory device may be embodied as a non-transitory computer readable medium storing instructions executable by the processor to perform various functions of the base station 910 disclosed herein. In some implementations, the memory device and the processor are integrated as a single component.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the implementations disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary implementation, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The implementations of the present disclosure may be implemented using existing computer processors, or by a special purpose computer processor for an appropriate system, incorporated for this or another purpose, or by a hardwired system. Implementations within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or implementation, and references to "an implementation," "some implementations," "one implementation" or the like are not necessarily mutually exclusive and are intended to indicate that a particular feature, structure, or characteristic described in connection with the implementation can be included in at least one implementation or implementation. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. The orientation of various elements may differ according to other exemplary implementations, and that such variations are intended to be encompassed by the present disclosure.

## Claims

1. A method, comprising:
capturing, by an image capture device, one or more images;
determining, by one or more processors coupled with memory, that a parameter of the one or more images meets a threshold; and
causing the image capture device to reduce a frame rate of capturing the one or more images responsive to the parameter meeting the threshold.

2. The method of claim 1, wherein the parameter of the one or more images corresponds to a gain and an exposure; and
the method further comprises causing, by the one or more processors, the image capture device to reduce the frame rate responsive to a function of the gain and the exposure exceeding a threshold.

3. The method of claim 1 or 2, comprising:
causing, by the one or more processors, the image capture device to reduce the frame rate responsive to the parameter meeting a low light condition.

4. The method of any preceding claim, comprising:
reducing, by the one or more processors, the frame rate from a first frame rate to a second frame rate responsive to the parameter exceeding a first threshold; and
increasing, by the one or more processors, the frame rate from the second frame rate to the first frame rate responsive to the parameter falling below a second threshold less than the first threshold.

5. The method of any preceding claim, wherein the image capture device is a first image capture device; and
the method further comprises maintaining, by the one or more processors, alignment of images captured by the first image capture device and a second image capture device prior to and subsequent to causing the first image capture device to reduce the frame rate.

6. The method of any preceding claim, wherein a first frame rate is 120 Hz and a second frame rate is 50 Hz or 60 Hz.

7. The method of any preceding claim, wherein the image parameter corresponds one or more of a gain, an exposure, a frame brightness, a shutter speed, an aperture, a signal to noise ratio (SNR) of the image, or a sharpness of the image.

8. The method of any preceding claim, further comprising performing a tracking operation using the one or more images.

9. A system, comprising:
an image capture device; and
one or more processors configured to carry out the method of any preceding claim.

10. The system of claim 9, wherein:
the image capture device is a first image capture device; and
the system comprises a second image capture device.

11. The system of claim 9 or 10, further comprising a wearable housing coupled with the image capture device, the display device, and the one or more processors.

12. A computer-readable medium with instructions embodied thereon that, when executed by one or more processors, cause the one or more processors to perform the method of any of claims 1 to 8.

13. A computer program product comprising instructions which, when executed by a computer, cause the computer to perform the method of any of claims 1 to 8.
